(19) Europäisches Patentamt
European Patent Office
Office européen des brevets

(11) Publication number: **0 411 937 A2**

(12) **EUROPEAN PATENT APPLICATION**

(21) Application number: **90308497.8**

(22) Date of filing: **01.08.90**

(51) Int. Cl.5: **C08F 4/642**, C08F 10/00

(30) Priority: **01.08.89 JP 198009/89**
**01.08.89 JP 198010/89**

(43) Date of publication of application:
**06.02.91 Bulletin 91/06**

(84) Designated Contracting States:
**BE DE FR GB IT NL**

(71) Applicant: **Tonen Corporation**
**1-1 Hitotsubashi, 1-Chome Chiyoda-Ku**
**Tokyo 100(JP)**

(72) Inventor: **Kohara, Tadanao, Corp. Research & Development Lab.ab.**
**Tonen Corp, 3-1 Nishitsurugaoka 1-chome, Ooi-machi**
**Iruma-gun, Saitama-ken(JP)**
Inventor: **Ueki, Satoshi, Corp. Research & Development Lab.ab.**
**Tonen Corp, 3-1 Nishitsurugaoka 1-chome, Ooi-machi**
**Iruma-gun, Saitama-ken(JP)**
Inventor: **Murata, Masahide, Corp. Research & Development LabLab**
**Tonen Corp, 3-1 Nishitsurugaoka 1-chome, Ooi-machi**
**Iruma-gun, Saitama-ken(JP)**

(74) Representative: **Veldhuizen, Albert Dirk Willem et al**
**Exxon Chemical Limited Exxon Chemical Technology Centre PO Box 1**
**Abingdon Oxfordshire OX13 6BB(GB)**

(54) **Catalyst for polymerization of olefins.**

(57) This invention consists of a novel catalyst for the polymerization of olefins which is obtained by the combination of a transition metal compound with the reaction product of an organoaluminum compound and a condensation agent wherein the condensation agent may be a diol compound, diamine compound, or an ammonia complex of copper.

EP 0 411 937 A2

# CATALYST FOR POLYMERIZATION OF OLEFINS

## Field of Industrial Application

The present invention relates to a catalyst for and the process of polymerizing olefins.

## Prior Art

Attempts have been made to polymerize olefins by the aid of a catalyst composed of a specific titanium compound and a contact product of an organoaluminum compound and a condensation agent. See Japanese Patent Laid-open No. 179906/1988. However, the condensation agent disclosed therein is water alone, and no other condensation agents are disclosed.

On the other hand, a catalyst for olefin polymerization which is composed of a specific transition metal compound and a reaction product of a trialkyl aluminum and a compound containing one or more hydroxyl groups is disclosed in Japanese Patent Laid-open No. 101303/1989. However, it mentions nothing about the effectiveness of this catalyst for polymerization of styrene compounds.

## Problem To Be Solved By The Invention

It is an object of the present invention to provide a catalyst for polymerization of olefins which is composed of a transition metal compound and a reaction product of an organoaluminum compound and a compound with a condensation agent other than water.

## Means To Solve The Problem

The present inventors have found that a catalyst effective for polymerization of olefins is obtained by the combination of a transition metal compound with a reaction product of an organoaluminum compound and a condensation agent such as diol compounds. The present invention was completed on the basis of this finding.

## SUMMARY OF THE INVENTION

The gist of the invention resides in a catalyst for polymerization of olefins which comprises:

(A) a transition metal compound represented by the general formula $MX^1X^2X^3X^4$ where M denotes a titanium atom, zirconium atom, or hafnium atom; and $X^1$, $X^2$, $X^3$, and $X^4$ are the same or different, each denoting a hydrogen atom, halogen atom, or $C_{1-20}$ organic group, and

(B) a reaction product of an organoaluminum compound (a) and at least one kind of condensation agent (b) selected from the following groups (1) to (3).

(1) diol compounds represented by the formula HO-R-OH where R denotes a divalent organic group having 2-20 carbon atoms,

(2) diamine compounds represented by the formula $H_2N\text{-}R^1\text{-}NH_2$ where $R^1$ denotes a divalent organic group having 2-20 carbon atoms, and

(3) ammonia complexes of copper.

## Catalyst for Polymerization

According to the present invention, the catalyst for polymerization is composed of (A) a transition metal compound represented by the general formula above and (B) a reaction product of (a) an organoaluminum compound and (b) a condensation agent specified above.

(A) Transition metal compound

The transition metal compound in this invention is represented by the general formula $MX^1X^2X^3X^4$ where M denotes a titanium atom, zirconium atom, or hafnium atom; and $X^1$, $X^2$, $X^3$, and $X^4$ are the same or different, each denoting a hydrogen atom, halogen atom, or $C_{1-20}$ organic group.

The halogen atom includes chlorine, bromine, iodine, and fluorine, with the first tvo being preferable.

The organic group includes $C_{1-20}$ alkyl groups, cycloalkyl groups, aryl groups, aralkyl groups, cycloalkadienyl groups, alkoxy groups, $SR^2$ groups, $CO \cdot NR^3_2$ groups, and $SiR^4_3$ groups (where $R^2$, $R^3$, and $R^4$ each denote a $C_{1-12}$alkyl group or aryl group).

Examples of the alkyl group include methyl, ethyl, propyl, i-propyl, butyl, i-butyl, t-butyl, pentyl, hexyl, octyl, 2-ethylhexyl, and decyl. Examples of the cycloalkyl group include cyclopentyl, cyclohexyl, and methyl-cyclohexyl. Examples of the aryl group include phenyl, tolyl, xylyl, and naphthyl. Examples of the aralkyl group include benzyl, phenetyl, 3-phenylpropyl, and a-methyl-benzyl. Examples of the cycloalkadienyl group include cyclopentadienyl, methylcyclopentadienyl, ethylcyclopentadienyl, dimethylcyclopentadienyl, pentamethylcyclopentadienyl, indenyl, and tetrahydroindenyl. Examples of the alkoxy group include methoxy, ethoxy, propoxy, isopropoxy butoxy, isobutoxy, t-butoxy, pentyloxy, hexyloxy, octyloxy, 2-ethylhexyloxy, phenoxy, and naphthyloxy. The alkyl groups and aryl groups represented by $R^2$, $R^3$, and $R^4$ in the $SR^2$ groups, $CO \cdot NR^3_2$ groups, and $SiR^4_3$ groups include the same alkyl groups and aryl groups as listed above.

(1) Examples of the titanium compound are listed below. Symbols to denote group names are: Me = methyl, Et = ethyl, Pr = propyl, Bu = butyl, He = hexyl, Ph = phenyl, Cp = cyclopentadienyl, and Bz = benzyl.

$TiCl_4$, $TiBr_4$, $TiH_4$, $TiBz_4$, $Ti(OMe)Cl_3$, $Ti(OEt)Cl_3$, Ti(Oi-Pr)$Cl_3$, $Ti(OBu)Cl_3$, $Ti(OEt)_2Cl_2$, Ti(Oi-Pr)$_2$$Cl_2$, Ti-$(OBu)_2Cl_2$, $Ti(OPh)_2Cl_2$, titanium dinaphthyloxydichloride, $Ti(OEt)_3Cl$, Ti(Oi-Pr)$_3$Cl, $Ti(OBU)_3Cl$, $Ti(OMe)_4$, $Ti(OEt)_4$, Ti(Oi-Pr)$_4$, $Ti(OBu)_4$, Ti(Ot-Bu)$_4$, Ti(O•2-Et•He)$_4$, $Ti(OPh)_4$, $Ti(OBz)_4$, $CpTiCl_3$, $Cp_2TiClH$, $Cp_2TiH_2$, $Cp_2(OMe)_2Ti$, $Cp_2(OEt)_2Ti$, $Cp_2(OBu)_2Ti$, $Cp_2$(O•2-Et•He)$_2$Ti, $Cp_2MeTi(OEt)$, $Cp_2EtTi(OEt)$, $Cp_2PhTi(OEt)$, $Cp_2(OMe)TiCl$, $Cp_2(OEt)TiCl$, (Me•Cp)$_2$(OEt)TiCl, bis (indenyl) ethoxytitanium chloride, ethylenebis (4,5,6,7-tetrahydro-1-indenyl) ethyoxytitanium chloride, $Cp_2TiMe_2$, $Cp_2TiBz_2$, $Cp_2(SEt)TiCl$, $Cp_2(SpH)TiCl$, $Cp_2$(CO•NMe$_2$)$_2$Ti, $Cp_2(SiMe_3)TiCl$, and $Cp_2(SiPh_3)TiCl$.

(2) Examples of the zirconium compound are listed below. $ZrCl_4$, $ZrBr_4$, $ZrH_4$, $ZrBz_4$, $Zr(OMe)Cl_3$, Zr-$(OEt)Cl_3$, Zr(Oi-Pr)$Cl_3$, $Zr(OBu)Cl_3$, $Zr(OEt)_2Cl_2$, Zr(Oi-Pr)$_2$$Cl_2$, Zr(O-Bu)$_2$$Cl_2$, $Zr(OPh)_2Cl_2$, zirconium dinaphthyloxydichloride, $Zr(OEt)_3Cl$, Zr(Oi-Pr)$_3$Cl, $Zr(OBu)_3Cl$, $Zr(OEt)_4$, Zr(Oi-Pr)$_4$, $Zr(OBu)_4$, Zr(Ot-Bu)$_4$, Zr(O•2-Et•He)$_4$, $Zr(OPh)_4$, $Zr(OBz)_4$, $CpZrCl_3$, $Cp_2ZrCl_2$, $Cp_2ZrClH$, $Cp_2ZrH_2$, $Cp_2(OMe)_2Zr$, $Cp_2(OEt)$-$_2$Zr, $Cp_2(OBu)_2Zr$, $Cp_2$(O•2-Et•He)$_2$Zr, $Cp_2MeZr(OEt)$, $Cp_2MeZr(OBu)$, $Cp_2PhZr(OEt)$, $Cp_2PhZr(OEt)$, $Cp_2BzZr(OEt)$, $Cp_2(OMe)ZrCl$, $Cp_2(OEt)ZrCl$, $Cp_2(OBu)ZrCl$, $Cp_2$(O•2-Et•He)ZrCl, $Cp_2(OPh)ZrCl$, bis-(cyclopentadienyl)cyclohexyloxyzirconium chloride, (Me•Cp)$_2$ (OEt)TiCl, bis(indenyl)ethoxyzirconium chloride, ethylene bis (4,5,6,7-titrahydro-1-indenyl)ethoxyzirconium chloride, $Cp_2ZrMe_2$, $Cp_2ZrMe_2$, $Cp_2ZrBz_2$, $Cp_2(SEt)ZrCl$, $Cp_2(SPh)ZrCl$, $Cp_2$(CO•NMe$_2$)$_2$Zr, $Cp_2$(CO•NEt$_2$)ZrCl, $Cp_2$(Si-Me$_3$)ZrCl, and $Cp_2(SiPh_3)ZrCl$.

(3) Examples of the hafnium compound are listed below. $HfCl_4$, $HfBr_4$, $HfH_4$, $HfBz_4$, $Hf(OMe)Cl_3$, Hf(OEt)-$Cl_3$, $Hf(OBu)Cl_3$, $Hf(OEt)_2Cl_2$, $Hf(OBu)_2Cl_2$, $Hf(OPh)_2Cl_2$, $Hf(OEt)_3Cl$, $Hf(OBu)_3Cl$, $Hf(OMe)_4$, $Hf(OEt)_4$, Hf-$(OBu)_4$, $Hf(OPh)_4$, $Hf(OBz)_4$, $CpHfCl_3$, $Cp_2HfCl_2$, $Cp_2HfClH$, $Cp_2HfH_2$, $Cp_2(OEt)_2Hf$, $Cp_2(OBu)_2Hf$, $Cp_2MeHf(OEt)$, $Cp_2EtHg(OEt)$, $Cp_2PhHf$ (OEt), CpBzHf(OEt), $Cp_2(OEt)HfCl$, $Cp_2(OBu)HfCl$, $Cp_2$(O•2-Et•He)HfCl, $Cp_2(OPh)HfCl$, (Me•Cp)$_2$(OEt)HfCl, bis(indenyl)ethoxyhafnium chloride, $Cp_2HfMe_2$, $Cp_2HfBz_2$, $Cp_2(SEt)HfCl$, $Cp_2(SPh)HfCl$, $Cp_2$(CO•NEt$_2$)HfCl, $Cp_2(SiMe_3)HfCl$, and $Cp_2(SiPh_3)HfCl$.

Preferable among the above-mentioned transition metal compounds are titanium compounds and zirconium compounds, especially titanium compounds.

(B) (a) Organoaluminum compound

The organoaluminum compounds are those represented by the formula $R^5_nAlX^5_{3-n}$ where $R^5$ is an alkyl group or aryl group; $X^5$ is a halogen atom, alkoxy group, or hydrogen atom; and n is any number from 1 to 3, such as trialkyl aluminum, dialkyl aluminum monohalide, monoalkyl aluminum dihalide, alkyl aluminum sesquihalide, dialkyl aluminum monoalkoxide, and dialkyl aluminum monohydride, having 1 to 18 carbon atoms, preferably 1 to 6 carbon atoms, in the form of compound, mixture, or complex compound.

Examples of the organoaluminum compounds are listed below. Trialkyl aluminum such as trimethyl aluminum, triethyl aluminum, tripropyl aluminum, triisobutyl aluminum, and trihexyl aluminum. Dialkyl

aluminum monohalide such as dimethyl aluminum chloride, diethyl aluminum chloride, diethyl aluminum bromide, diethyl aluminum iodide, and diisobutyl aluminum chloride. Monoalkyl aluminum dichloride such as methyl aluminum dichloride, ethyl aluminum dichloride, methyl aluminum dibromide, ethyl aluminum dibromide, ethyl aluminum diiodide, and isobutyl aluminum dichloride. Alkyl aluminum sesquihalide such as ethyl aluminum sesquichloride. Dialkyl aluminum monoalkoxide such as dimethyl aluminum methoxide, diethyl aluminum ethoxide, diethyl aluminum phenoxide, dipropyl aluminum ethoxide, diisobutyl aluminum ethoxide, and diisobutyl aluminum phenoxide. Dialkyl aluminum hydride such as dimethyl aluminum hydride, diethyl aluminum hydride, dipropyl aluminum hydride, and diisopropyl aluminum hydride. Preferable among them is trialkyl aluminum, especially trimethyl aluminum.

(B) (b) Condensation agent

(1) Diol compound

The diol compound is represented by the formula HO-R-OH, where R is a $C_{1-20}$ divalent organic group. Examples of the group R include $-CR^6R^7 \bullet CR^8R^9$, $(CH_2)_n$,

$(CH_2)_n$, 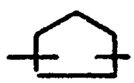, 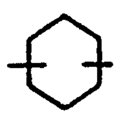, 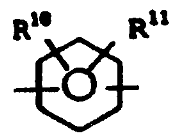, and 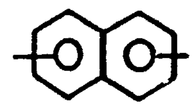.

where $R^6$, $R^7$, $R^8$, and $R^9$ independently denote a hydrogen atom, methyl group, or phenyl group; $R^{10}$ and $R^{11}$ each denote a hydrogen atom, $C_{1-6}$ alkyl group, or $OR^{12}$ group where $R^{12}$ denotes a methyl group or ethyl group; and n is 3 to 12.

Examples of the diol compound include ethylene glycol, propylene glycol, pinacol, hydrobenzoin, benzpinacol, trimethylene glycol, 1,4-butanediol, 1,5-pentanediol, 1,6-hexanediol, 1,8-octanediol, 1,10-decaneediol, 1,2-cyclopentanediol, 1,2-cyclohexanediol, 1,3-cyclohexanediol, 1,4-cyclohexanediol, catechol, resorcin, hydroquinone, 1,3-dioxytoluene, 3,4-dioxytoluene, resorcin, orcin, B-orcin, m-xylorcin, 4-m-hexylresorcin, 2-methylhydroquinone, 2,5-t-butylhydroquinone, 2,5-t-pentylhydroquinone, and 2,5-diethoxyhydroquinone.

Preferable among them are ethylene glycol, propylene glycol, pinacol, 1,2-cyclohexanediol, and 1,4-cyclohexanediol.

Additional examples of the diol compound include monosaccharides having 3-6 carbon atoms such as sorbitol, glucose, and erythritol.

(2) Diamine compound

The diamine compound is represented by the formula $H_2H-R^1-NH_2$, where $R^1$ is a $C_{1-20}$ divalent organic group.

Examples of the group $R^1$ include $(CH_2)_n$,

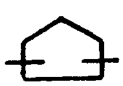, 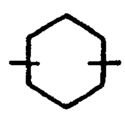, 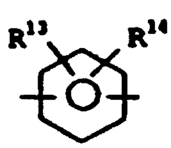, and 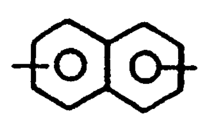.

where $R^{13}$ and $R^{14}$ each denote a hydrogen atom or $C_{1-6}$ alkyl group; and n is 2 to 12.

Examples of the diamine compound include ethylenediamine, tetramethylenediamine, hexamethylenediamine, 1,7-diaminoheptane, 1,8-diaminooctane, 1,10-diaminodecane, o-phenylenediamine, m-phenylenediamine, and p-phenylenediamine.

(3) Ammonia complexes of copper

The ammonia complexes of copper include $[Cu(NH_3)_4](NO_3)_2$ and $[Cu(NH_3)_4]$ $(SO_4 \cdot H_2O)$.

The catalyst of the present invention contains the second component which is a reaction product of the above-mentioned organoaluminum compound (a) and the above-mentioned condensation agent (b). The reaction of (a) and (b) should be performed by bringing them together preferably in the presence of an inert hydrocarbon medium such as hexane, heptane octane, cyclohexane, benzene, toluene, and xylene. They should be brought together at a temperature in the range of 30° C to +100° C for 4 to 50 hours. The molar ratio of (b) to (a) should be 0.1 to 10, preferable 0.5 to 2.0.

The catalyst of the present invention is the first component, which is a transition metal compound, the second component, which is a reaction product of an organoaluminum compound and a condensation agent. The first and second components should be used in such amounts that the molar ratio of the aluminum metal in the second component to the transition metal in the first component is from 1 to $10^6$, preferably from 10 to $10^5$.

## Polymerization of Olefins

The catalyst of the present invention is particularly useful in the polymerization of olefins such as ethylene, styrene, α-olefins having 3-12 carbon atoms, and cycloolefins having 5-12 carbon atoms.

Preferred α-olefins are α-olefins having 3-6 carbon atoms, such as polypropylene, 1-butene, 4-methyl-1-pentene, a nd 1-hexene. Preferred cycloolefins are cyclopentene, cycloheptene, and cyclooctene. Other olefins include nonconjugated terminal diolefins having 5-16 carbon atoms, such as 2-methyl-1,4-pentadiene, 1,4-hexadiene, 4-methyl-1,4-hexadiene, 5-methyl-1,4-hexadiene, 1,4-heptadiene, 4-ethyl-1,4-hexadiene, 4,5-dimethyl-1,4-hexadiene, 4-methyl-1,4-heptadiene, 4-ethyl-1,4-heptadiene, 5-methyl-1,4-heptadiene 5-methyl-1,5-octadiene, 1,5-heptadiene, 1,5-octadiene, 5-methyl-1,5-heptadiene, 6-methyl-1,5-heptadiene, 2-methyl- 1,5-hexadiene, 1,6-octadiene, 6-methyl-1,6-octadiene, 7-methyl-1,6-octadiene, 2-methyl-1,6-heptadiene, 1,9-decadiene, 1,13-tetradecadiene. Preferable among them are 1,4-hexadiene, 2-methyl-1,5-hexadiene, 7-methyl-1,6-octadiene, 1,9-decadiene, and 1,13-tetradecadiene.

Preferred styrene compounds are -methylstyrene, *o*-methylstyrene, *m*-methylstyrene, *p*-methylstyrene, *o,m*-dimethylstyrene, *o*-ethylstyrene, *m*-ethylstyrene, *p*-ethylstyrene, *o*-chlorostyrene, and *p*-chlorostyrene.

The polymerization reaction may be carried out in either gas phase or liquid phase, and the polymerization in liquid phase may be carried out in liquid monomer or an inert hydrocarbon such as *n*-butane, isobutane, *n*-pentane, isopentane, hexane, heptane, octane, cyclohexane, benzene, toluene, and xylene. Preferred inert hydrocarbons are benzene, toluene, and xylene. The polymerization temperature should be in the range of -80½ C to +150½ C, preferably +40½ C to +120½ C. The polymerization pressure should be 1 to 60 atm. The molecular weight of the desired polymer may be controlled by the aid of hydrogen or any other known molecular weight modifier. The polymerization of olefins embraces homopolymerization and both random and block copolymerization. The polymerization reaction may be carried out batchwise or continuously in a single stage or in multiple stages.

## Examples

The invention will be described in more detail with reference to the following examples.

### Example 1

Reaction to trimethyl aluminum with ethylene glycol

A solution prepared by dissolving 15 mL of triethyl aluminum in 60 mL of toluene was placed in a 200-mL flask equipped with a stirrer and dropping funnel, with the atmosphere therein replaced with nitrogen gas. The dropping funnel was filled with a solution prepared by dissolving 0.19 mol of ethylene glycol in 30 mL of toluene.

The ethylene glycol solution was added dropwise with stirring from the dropping funnel at 0° C over 1.5 hours. The dropwise addition brought about the evolution of methane. White solids were obtained.

Polymerization of styrene

The reaction product obtained mentioned above, containing 10 mg-atom of aluminum metal, was placed in a 1-liter glass autoclave with 0.17 mmol of tetrabutoxy titanium, and 250 mL of toluene, with the atmosphere in the autoclave replaced by nitrogen gas. 30g. of styrene was added to the autoclave, and was polymerized at 50° C for 2 hours. Polystyrene was produced in a catalytic activity of 400 g•polymer/g•Ti hour.

Examples 2 to 7

The ethylene glycol used in Example 1 for reacting with triethyl aluminum was replaced by the condensation agent shown in the second column of Table 1. The reaction product was used for polymerization of styrene in the same manner as in Example 1. The results are shown in Table 1.

Examples 8 to 12

The tetrabutoxy titanium used in Example 1 was replaced by the transition metal compound shown in the third column of Table 1. The reaction product was used for polymerization of styrene in the same manner as in Example 1. The results are shown in Table 1.

Examples 13 and 14

The ethylene glycol used in Example 1 for reaction with trimethyl aluminum was replaced by the condensation agent shown in Table 1. The reaction product was used for polymerization of styrene in the same manner as in Example 1. The results are shown in Table 1.

Example 15

Polymerization of ethylene

The reaction product described in Example 1 above, containing 10 mg-atom of aluminum metal, was placed in a 1-liter glass autoclave with 0.01 mmol of tetrabutoxy titanium, and 250 mL of toluene, with the atmosphere in the autoclave replaced by nitrogen gas. Ethylene was introduced into the autoclave under a constant pressure of 1.2 $kg/cm^2$•G, so that ethylene was polymerized at 50° C for 2 hours. Polyethylene was produced in a catalytic activity of 2700 g•polymer/g•Ti ethylene pressure ($kg/cm^2$)•hour.

Examples 16 to 21

The ethylene glycol used in Example 15 for reacting with triethyl aluminum was replaced by the condensation agent shown in the second column of Table 1. The reaction product was used for polymerization of ethylene in the same manner as in Example 15. The results are shown in Table 1.

Examples 22 to 24 and Comparative Examples 1 and 2

The tetrabutoxytitanium used in Example 15 was replaced by the transition metal complound shown in the third column of Table 1. The reaction product was used for polymerization of ethylene in the same manner as in Example 15. The results are shown in able 1.

Example 25

Polymerization of propylene was performed in the same manner as in Example 15, except that ethylene was replaced by propylene and the amount of tetrabutoxy titanium was changed to 0.1 gram-mol. Polypropylene was produced in a catalytic activity of 103 g•polymer/g•Ti•propylene pressure ($kg/cm^2$)-•hour.

Examples 26 and 27

The ethylene glycol used in Example 1 for reaction with triethyl aluminum was replaced by the condensation agent shown in Table 1. The reaction product was used for polymerization of ethylene in the same manner as in Example 15. The results are shown in Table 1.

TABLE 1

| Example No. | Condensation agent | Transition metal compound | Catalytic activity (g.p'mer/g.Ti*hr) |
|---|---|---|---|
| 1 | ethylene glycol | $Ti(OBu)_4$ | 300 |
| 2 | propylene glycol | $Ti(OBu)_4$ | 6.2 |
| 3 | pinacol | $Ti(OBu)_4$ | 17 |
| 4 | catechol | $Ti(OBu)_4$ | 20 |
| 5 | resorcin | $Ti(OBu)_4$ | 7.9 |
| 6 | 1,2-cyclohexanediol | $Ti(OBu)_4$ | 14 |
| 7 | 1,4-cyclohexanediol | $Ti(OBu)_4$ | 4.2 |
| 8 | ethylene glycol | $TiCl_4$ | 78 |
| 9 | ethylene glycol | $Ti(OEt)_4$ | 230 |
| 10 | ethylene glycol | $Cp_2TiMe_2$ | 410 |
| 11 | ethylene glycol | $Cp_2TiCl_2$ | 420 |
| 12 | ethylene glycol | $Zr(OBu)_4$ | 31 |
| 13 | ethylenediamine | $Ti(OBu)_4$ | 3.2 |
| 14 | $[Cu(NH_3)_4](NO_3)_2$ | $Ti(OBu)_4$ | 1.8 |
| 15 | ethylene glycol | $Ti(OBu)_4$ | 2,700 |
| 16 | propylene glycol | $Ti(OBu)_4$ | 870 |
| 17 | pinacol | $Ti(OBu)_4$ | 115 |
| 18 | catechol | $Ti(OBu)_4$ | 124 |
| 19 | resorcin | $Ti(OBu)_4$ | 96 |
| 20 | 1,2-cyclohexanediol | $Ti(OBu)_4$ | 128 |
| 21 | 1,4-cyclohexanediol | $Ti(OBu)_4$ | 75 |
| 22 | ethylene glycol | $TiCl_4$ | 87 |
| 23 | ethylene glycol | $Ti(OEt)_4$ | 420 |
| 24 | ethylene glycol | $Zr(OEt)_4$ | 3,420 |
| (1) | ethylene gtlycol | $CpZrCl_2$ | 390 |
| (2) | ethylene glycol | $CpTiCl_2$ | 58 |
| 26 | ethylenediamine | $Ti(OBu)_4$ | 207 |
| 27 | $[Cu(NH_3)_4](NO_3)_2$ | $Ti(OBu)_4$ | 63 |

*Parentheses indicate comparative Examples.

## Claims

1. A catalyst for polymerization of olefins which comprises:

(A) a transition metal compound represented by the general formula $MX^1X^2X^3X^4$ where M represents titanium, zirconium or hafnium; and $X^1$, $X^2$, and $X^4$ are the same or different, each representing hydrogen, a halogen, or a $C_{1-20}$ organic group, and

(B) a reaction product of an organoaluminum compound (a) and at least one kind of condensation agent

(b) selected from the following groups (1) to (3).

(1) diol compounds represented by the formula HO-R-OH (where R denotes a divalent organic group having 2-20 carbon atoms),

(2) diamine compounds represented by the formula $H_2N-R^1-NH_2$ Where $R^1$ denotes a divalent organic group having 2-20 carbon atoms, and

(3) ammonia complexes of copper.

2. The catalyst or claim 1, wherein the transition metal compound is tetrabutoxy titanium.

3. The catalyst of claim 1 or claim 2, wherein the condensation agent is selected from the group consisting of ethylene glycol, propylene glycol, pinacol, catachol, resorcin, 1,2-cyclohexanediol, and 1,4-cyclohexanediol.

4. The catalyst according to claim 3, wherein the condensation agent is ethylene glycol the transition metal compound is selected from the group consisting of titanium tetrachloride, tetraethoxy titanium, tetrabutoxy zirconium, dicyclopentadienyl titanium dimethyl, dicyclopentadienyl titanium dichloride, and ethylenediamine.

5. The reaction product of an organolaluminium compound (a) and at least one kind of condensation agent (b) selected from the group consisting of diamine compounds represented by the formula $H_2N-R-NH_2$ where R represents a divalent organic group having 2-20 carbon atoms, and ammonia complexes of copper.

6. The process of polymerization of olefins using the catalyst according to any of the preceding claims.

7. The process in accordance with claim 6 wherein the olefin is styrene.